# EUROPÄISCHE PATENTSCHRIFT

(11) **EP 4 164 936 B1**
(45) Veröffentlichungstag und Bekanntmachung des Hinweises auf die Patenterteilung: **12.02.2025**
(21) Anmeldenummer: 21731977.1
(22) Anmeldetag: 08.06.2021
(51) Int. Cl.: B62D 5/04, B62D 6/00

(54) **VERFAHREN ZUR ÄNDERUNG DER LENKCHARAKTERISTIK EINES STEER-BY-WIRE-LENKSYSTEMS**
METHOD FOR CHANGING THE STEERING CHARACTERISTICS OF A STEER-BY-WIRE STEERING SYSTEM
PROCÉDÉ POUR MODIFIER LA CARACTÉRISTIQUE DE DIRECTION D'UN SYSTÈME DE DIRECTION ÉLECTRIQUE DE TYPE STEER-BY-WIRE

(30) Priorität: 10.06.2020 DE 102020207264
(43) Veröffentlichungstag der Anmeldung: 19.04.2023
(73) Patentinhaber: thyssenkrupp Presta AG, 9492 Eschen (LI); thyssenkrupp AG, 45143 Essen (DE)
(72) Erfinder: KAKAS, Peter, 1118 Budapest (HU); PÁSZTOR, Levente, 1091 Budapest (HU)
(74) Vertreter: thyssenkrupp Intellectual Property GmbH
(86) Internationale Anmeldenummer: PCT/EP2021/065233
(87) Internationale Veröffentlichungsnummer: WO 2021/249977

(56) Entgegenhaltungen:
- WO-A1-2019/141652
- DE-B4- 10 360 582
- US-A1- 2004 211 618

## Beschreibung

Die Erfindung betrifft ein Verfahren zur Änderung der Lenkcharakteristik eines eine Lenksäule, einen Lenkungsaktuator und einen Feedbackaktuator umfassenden Steer-by-Wire-Lenksystems in Abhängigkeit einer Leistungsdegradation des Lenkungsaktuators, wobei der Feedbackaktuator dazu eingerichtet ist, die Lenksäule mit einem Lenkwiderstandsdrehmoment zu beaufschlagen. Des Weiteren betrifft die Erfindung ein Steer-by-Wire Lenksystem.

Bei einem Steer-by-Wire-Lenksystem eines Kraftfahrzeugs ist es vorgesehen, dass die gelenkten Räder des Kraftfahrzeugs nicht mechanisch mit dem Lenkeingabemittel bzw. der Lenkhandhabe, beispielsweise einem Lenkrad, gekoppelt sind. In einem solchen Lenksystem wird die Stellung des Lenkrads nicht rein mechanisch auf die Stellung der gelenkten Räder übertragen. Vielmehr wird eine Lenkraddrehung auch über elektrische Signale in eine entsprechende Auslenkung der gelenkten Räder übertragen. Ein Steer-by-Wire-Lenksystem kann als Vorderradlenksystem oder als Hinterradlenksystem ausgestaltet sein.

Ein Steer-by-Wire-Lenksystem umfasst eine bidirektional arbeitende Datenübertragungseinrichtung, insbesondere ein Datenkabel oder ein Bus-System. Die Datenübertragungseinrichtung ist einerseits dazu ausgebildet, Daten in Lenkwunschrichtung zu übertragen, das heißt ausgehend von dem Feedbackaktuator in Richtung des Lenkungsaktuators. Die Datenübertragungseinrichtung ist andererseits dazu ausgebildet, Daten in Feedbackrichtung zu übertragen, das heißt ausgehend von dem Lenkungsaktuator in Richtung des Feedbackaktuators.

In Lenkwunschrichtung dient der Lenkungsaktuator dazu, die gelenkten Räder des Kraftfahrzeugs entsprechend dem Lenkwunsch, das heißt der Lenkraddrehung, zu bewegen, um das Kraftfahrzeug für den Fahrer steuerbar zu machen. In Feedbackrichtung dient der Lenkungsaktuator dazu, von der Straße auf die Fahrzeugräder übertragene Kräfte sensorisch zu erfassen und dem Feedbackaktuator oder einem den Feedbackaktuator steuernden Steuergerät zu übermitteln. Außerdem dient in Lenkwunschrichtung der Feedbackaktuator dazu, den Lenkwunsch bzw. den Lenkbefehl, insbesondere die Lenkraddrehung, sensorisch zu erfassen. In Feedbackrichtung dient der Feedbackaktuator dazu, von der Straße auf die Fahrzeugräder übertragene Kräfte entsprechenden Drehmomente, auf das Lenkeingabemittel aufzuprägen, um dem Kraftfahrzeugfahrer eine haptische Rückkopplung während des Lenkvorgangs zu geben. Die haptische Rückkopplung für den Fahrer verbessert auch der Fahrzeugsicherheit, da der Fahrer auf diese Weise ein verbessertes Fahrgefühl erfährt.

Aus der DE 10 2017 220 069 A1 ist zudem ein Verfahren zum Betrieb eines Lenksystems in einem Fahrzeug bekannt, wobei im Fall einer Störung oder einer Fehlfunktion einer Fahrzeugkomponente eine mit der Vorderachslenkung korrelierte Lenkmomentkenngröße verändert wird. Insbesondere ist dabei vorgesehen, dass ein von einem Fahrer auf eine Lenkhandhabe aufzubringendes Lenkmoment in einem Fehlerbetriebszustand erhöht wird, wobei sich das Lenkmoment für unterschiedliche Lenkwinkel unterscheiden soll.

Ferner ist aus der US 2004/211618 A1 ein Steer-by-Wire-Lenksystem mit einem Lenkungsaktuator und einem Feedback-Aktuator bekannt, wobei vorgesehen ist, die Temperatur des Lenkungsaktuators zu überwachen. Überschreitet die Temperatur des Lenkungsaktuators einen vorgegebenen Schwellwert, so wird die Leistung des Lenkungsaktuators reduziert und der Strom für den Feedback-Aktuator erhöht, um ein erhöhtes Lenkwiderstandsdrehmoment zu erzeugen.

Die WO 2019/141652 A1 offenbart darüber hinaus ein Verfahren zur Steuerung eines Steer-by-Wire-Lenksystems beim Erreichen einer maximal zur Verfügung stehenden Leistung des Lenkstellers. Demnach soll, wenn die benötigte Leistung des Lenkstellers die maximale Leistung des Elektromotors überschreitet, eine Erhöhung eines am Lenkrad anliegenden, der weiteren Verdrehung des Lenkrads entgegenwirkenden Rückstellmoments bewirkt werden. Damit soll verhindert werden, dass eine fehlende Leistung des Lenkstellers vom Fahrer wahrgenommen wird.

In der DE 10 360 582 B4 wird des Weiteren ein Lenksystem offenbart, das auch als Steer-by-Wire-Lenksystem ausgebildet sein kann. Das Lenksystem umfasst dabei eine Steuerund/oder Auswerteeinrichtung, die ausgebildet ist, einen Schädigungsgrad des Lenksystems zu ermitteln. Bei Überschreiten eines vorgegebenen Schädigungsgrades wird ein Ausgabesignal erzeugt. Der Schädigungsgrad betrifft dabei die Lenkung oder Teile der Lenkung. Die Ermittlung des Schädigungsgrades erfolgt anhand von erfassten Parametern der Lenkung, aus denen mithilfe von vorgegebenen Auswerteregeln ein charakteristischer, den Schädigungsgrad repräsentierender Kennwert bestimmt wird.

Darüber hinaus kann es jedoch im Laufe der Betriebszeit eines Steer-by-Wire-Lenksystems passieren, dass sich die haptische Rückkopplung verschlechtert, da die Leistungsfähigkeit des Lenkungsaktuators abnimmt bzw. degradiert. Dies kann beispielsweise aufgrund von Überhitzungen des Lenkungsaktuators, Leistungsabfällen der Energieversorgung des Lenkungsaktuators oder anderen, die physikalischen Möglichkeiten des Lenkungsaktuators beeinflussenden Umständen geschehen. In einer Situation der Leistungsdegradation des Lenkungsaktuators vermag der Lenkungsaktuator außerdem nicht mehr in ausreichender Weise, die gelenkten Räder des Kraftfahrzeugs entsprechend dem Lenkwunsch zu bewegen. Mit anderen Worten: In einer Situation der Leistungsdegradation des Lenkungsaktuators folgen die Fahrzeugräder dem Lenkwunsch in einer unzureichenden Weise, insbesondere in einer verzögerten Weise. Denn zwischen der Eingabe des Lenkwunschs, beispielsweise durch eine Lenkraddrehung, und der entsprechenden Bewegung der Fahrzeugräder herrscht eine zeitliche Verzögerung. Diese Verzögerung erschwert es dem Fahrer, das Kraftfahrzeug sicher zu steuern. Dies kann zu Gefahrensituationen für die Fahrzeuginsassen führen, insbesondere wenn die Leistungsdegradation des Lenkungsaktuators während der Fahrt des Kraftfahrzeugs auftritt.

Im Lichte der vorangehend erläuterten Problematik liegt der vorliegenden Erfindung die Aufgabe zu Grunde ein Steer-by-Wire-Lenksystem zu verbessern. Insbesondere soll mit einfachen Mitteln eine Möglichkeit geschaffen werden, potentiell gefährliche Folgen einer Leistungsdegradation des Lenkungsaktuators eines Steer-by-Wire-Lenksystems abzumildern oder zu verhindern und vorteilhafterweise gleichzeitig den Fahrer über die Leistungsdegradation des Lenkungsaktuators zu informieren.

Die der vorliegenden Erfindung zugrundeliegende Aufgabe wird gelöst durch ein Verfahren zur Änderung der Lenkcharakteristik eines Steer-by-Wire-Lenksystems mit den Merkmalen des Anspruchs 1 und durch ein Steer-by-Wire-Lenksystem mit den Merkmalen des Anspruchs 12. Vorteilhafte Weiterbildungen ergeben sich aus den Unteransprüchen.

Es wird somit ein Verfahren zur Änderung der Lenkcharakteristik eines eine Lenksäule, einen Lenkungsaktuator und einen Feedbackaktuator umfassenden Steer-by-Wire-Lenksystems in Abhängigkeit einer Leistungsdegradation des Lenkungsaktuators vorgeschlagen, wobei der Feedbackaktuator dazu eingerichtet ist, die Lenksäule mit einem Lenkwiderstandsdrehmoment zu beaufschlagen. Das erfindungsgemäße Verfahren umfasst folgende Schritte: Ermitteln eines die Leistungsdegradation des Lenkungsaktuators repräsentierenden Degradationsfaktors; Berechnen eines zusätzlichen Lenkwiderstandsdrehmoments basierend auf dem ermittelten Degradationsfaktor; Beaufschlagen der Lenksäule mit einem die Leistungsdegradation des Lenkungsaktuators berücksichtigenden Lenkwiderstandsdrehmoment basierend auf dem berechneten, zusätzlichen Lenkwiderstandsdrehmoment.

Durch das erfindungsgemäße Verfahren ist es möglich, die potentiell gefährlichen Folgen einer Leistungsdegradation des Lenkungsaktuators eines Steer-by-Wire-Lenksystems abzumildern oder zu verhindern. Vorteilhafterweise ermöglicht das Verfahren zudem den Fahrer über die Leistungsdegradation des Lenkungsaktuators zu informieren. Denn das von der Leistungsdegradation des Lenkungsaktuators abhängige Beaufschlagen der Lenksäule erhöht den Lenkwiderstand, der der Lenkdrehrichtung entgegengesetzt ist. Somit ist die Lenkung vorteilhafterweise versteift, und zwar in einem Maß, das der ermittelten Leistungsdegradation des Lenkungsaktuators entspricht. Die Versteifung der Lenkung dient insbesondere als Ausgleich zur Leistungsdegradation des Lenkungsaktuators. Eine durch die Leistungsdegradation des Lenkungsaktuators entstehende, zeitliche Verzögerung in der Lenkung des Fahrzeugs ist dadurch verringert oder sogar verhindert. Gleichzeitig fungiert die Versteifung der Lenkung vorteilhafterweise dazu, den Fahrer darüber zu informieren, dass eine Leistungsdegradation des Lenkungsaktuators eingetreten ist. Dabei handelt es sich um eine haptisch übertragene Information. Das Maß bzw. das Ausmaß der Leistungsdegradation des Lenkungsaktuators kann der Fahrer aus der Größe des beaufschlagten, zusätzlichen Lenkwiderstandsdrehmoments erfassen. Somit ist der Fahrer auch über die Dringlichkeit einer erforderlichen Wartung des Lenksystems in Kenntnis gesetzt. Zusätzlich kann insbesondere ein vom Lenkungsaktuator unabhängiger, oszillierender Lenkwiderstand im Stillstand des Fahrzeugs zum Informieren des Fahrers beaufschlagt werden.

Die Leistungsdegradation des Lenkungsaktuators ist eine Verschlechterung bzw. Verringerung des maximal erreichbaren Leistungsvermögens des Lenkungsaktuators. Der Degradationsfaktor ist insbesondere eine dimensionslose Größe.

In vorteilhafter Weise wird der Degradationsfaktor basierend auf zumindest einer den physikalisch-technischen Zustand des Lenkungsaktuators repräsentierenden Größe, insbesondere die Alterung des Lenkungsaktuators repräsentierenden Größe, ermittelt.

In weiter vorteilhafter Weise ist die zumindest eine den physikalisch-technischen Zustand des Lenkungsaktuators repräsentierende Größe eine an dem Lenkungsaktuator erfasste Temperatur, eine an einem Teilsystem erfasste Temperatur, der Stromverbrauch des Lenkungsaktuators, die Spannungsänderung an dem Lenkungsaktuator, eine Fehlermeldung oder ein Diagnosesignal eines unter- oder übergeordneten Systems, eine die Alterung des Lenkungsaktuators repräsentierende Größe und/oder eine zumindest eine dieser Größen umfassende, zusammengesetzte Größe.

In noch weiter vorteilhafter Weise wird der Degradationsfaktor basierend auf der Differenz zwischen dem von dem Lenkungsaktuator zu erzeugenden, zur Umsetzung eines Lenkwunsches erforderlichen Drehmoment und dem von dem Lenkungsaktuator erzeugten, aufgrund der Leistungsdegradation des Lenkungsaktuators herabgesetzten Drehmoment ermittelt.

Insbesondere wird das zusätzliche Lenkwiderstandsdrehmoment auch basierend auf einem Reservelenkwiderstandsdrehmoment berechnet, wobei das Reservelenkwiderstandsdrehmoment ein zur Erzeugung haptischen Feedbacks zur Verfügung stehendes Lenkwiderstandsdrehmoment ist. Ausgehend von einem durch das System maximal bereitstellbaren Lenkwiderstandsdrehmoment und einem ermittelten einfachen Lenkwiderstandsdrehmoment, bei dem das basierend auf dem ermittelten Degradationsfaktor berechnete zusätzliche Lenkwiderstandsdrehmoments nicht mit berücksichtigt ist, ist das Reservelenkwiderstandsdrehmoment insbesondere die Differenz aus dem maximal bereitstellbaren Lenkwiderstandsdrehmoment und dem einfachen Lenkwiderstandsdrehmoment.

Vorteilhafterweise wird dieses Reservelenkwiderstandsdrehmoment auch genutzt, um damit das einfache Lenkwiderstandsdrehmoment mit dem basierend auf dem ermittelten Degradationsfaktor berechneten zusätzlichen Lenkwiderstandsdrehmoment zu beaufschlagen.

Weiter insbesondere wird das zusätzliche Lenkwiderstandsdrehmoment auch basierend auf einem Referenzlenkwiderstandsdrehmoment berechnet, wobei das Referenzlenkwiderstandsdrehmoment das Lenkwiderstandsdrehmoment unter der Annahme ausbleibender Leistungsdegradation des Lenkungsaktuators ist.

Gemäß einer weiteren vorteilhaften Ausgestaltung wird das die Leistungsdegradation des Lenkungsaktuators berücksichtigende Lenkwiderstandsdrehmoment berechnet, indem das Referenzlenkwiderstandsdrehmoment und das zusätzliche Lenkwiderstandsdrehmoment addiert werden.

Des Weiteren wird ein Steer-by-Wire-Lenksystem vorgeschlagen, das zum Betreiben des erfindungsgemäßen Verfahrens ausgebildet ist. Das Steer-by-Wire-Lenksystem umfasst vorteilhafterweise eine Lenksäule, einen Lenkungsaktuator und einen Feedbackaktuator, wobei der Feedbackaktuator insbesondere dazu eingerichtet ist, die Lenksäule mit einem Lenkwiderstandsdrehmoment zu beaufschlagen, insbesondere mit dem berechneten zusätzlichen Lenkwiderstandsdrehmoment. Weiter ist insbesondere vorgesehen, dass dem Steer-by-Wire-Lenksystem eine Recheneinheit zugeordnet ist. Die Recheneinheit kann dabei insbesondere von dem Steer-by-Wire-Lenksystem umfasst sein. Die Recheneinheit kann aber auch Teil einer zentralen ECU (ECU: Electronic Control Unit) eines Kraftfahrzeugs sein. Insbesondere ist die Recheneinheit ausgebildet, basierend auf dem Degradationsfaktor das zusätzliche Lenkwiderstandsdrehmoment zu bestimmen. Die Recheneinheit ist vorteilhafterweise weiter ausgebildet, das berechnete zusätzliche Lenkwiderstandsdrehmoment an eine Steuereinheit des Feedbackaktuators zu übertragen, sodass der Feedbackaktuator die Lenksäule beziehungsweise die Lenkwelle der Lenksäule mit einem die Leistungsdegradation des Lenkungsaktuators berücksichtigenden Lenkwiderstandsdrehmoment basierend auf dem berechneten zusätzlichen Lenkwiderstandsdrehmoment beaufschlagt. Die Recheneinheit kann insbesondere auch Teil der Steuereinheit des Feedbackaktuators sein. Insbesondere sieht eine weitere vorteilhafte Ausgestaltung vor, dass die Recheneinheit ausgebildet ist, wenigstens ein Sensorsignal von einem Sensor zu empfangen, insbesondere ein Sensorsignal betreffend den physikalisch-technischen Zustand des Lenkungsaktuators. Weiter vorteilhaft ist die Recheneinheit weiter ausgebildet, aus dem Sensorsignal den Degradationsfaktor zu bestimmen.

Vorteilhafte Ausführungsformen der Erfindung sind im Folgenden anhand der Zeichnung näher erläutert. Im Einzelnen zeigen die Figuren (Fig.: Figur):
- Fig. 1: ein Ausführungsbeispiel für ein erfindungsgemäß ausgebildetes Steer-by-Wire-Lenksystem in einer perspektivischen Darstellung,
- Fig. 2: ein zweidimensionales Koordinatensystem, in dem beispielhafte Werte für ein mit einem erfindungsgemäßen Verfahren ermitteltes Lenkwiderstandsdrehmoment über Werte für den Lenkdrehwinkel dargestellt sind.

In den verschiedenen Figuren sind gleiche Teile stets mit den gleichen Bezugszeichen versehen und sind daher in der Regel jeweils nur einmal benannt bzw. erwähnt.

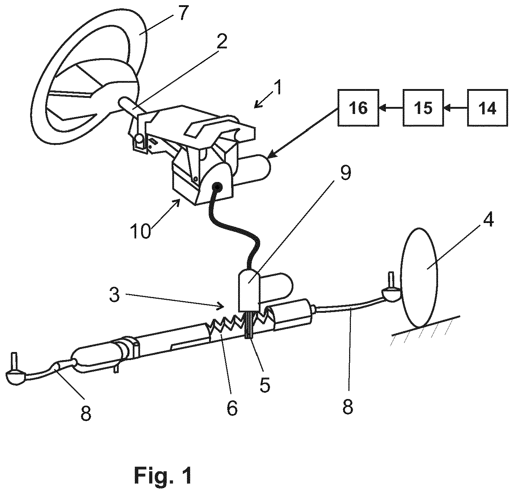

Fig. 1 zeigt ein Steer-by-Wire-Lenksystem in einer perspektivischen, vereinfachten Darstellung von schräg vorne bezugnehmend auf eine Fahrzeugfahrtrichtung.

Das in Fig. 1 dargestellte Steer-by-Wire-Lenksystem für ein Kraftfahrzeug umfasst eine Lenksäule 1 mit einer Lenkspindel 2. Die Lenksäule 1 ist über ein Lenkgetriebe 3 mechanisch mit den gelenkten Rädern 4 des Kraftfahrzeugs gekoppelt. Das Lenkgetriebe 3 umfasst ein Ritzel 5 und eine Zahnstange 6, die auch als gezahnte Koppelstange bezeichnet werden kann. Das Lenkgetriebe 3 dient zur Übersetzung einer rotatorischen Bewegung des Ritzels 5 in eine translatorische Bewegung der Zahnstange 6 entlang der Längsachse der Zahnstange 6. An dem dem Fahrer zugewandten Ende der Lenksäule 1 und somit der Lenkspindel 2 ist ein Lenkrad 7 zur Eingabe eines Fahrerlenkwunsches bzw. Lenkbefehls befestigt, wobei der Fahrer das Lenkrad 7 in bekannter Weise zur Eingabe seines Lenkwunsches drehen kann. Die sich entlang ihrer Längsachse linear bewegende Zahnstange 6 ist jeweils zu beiden Seiten des Kraftfahrzeugs mechanisch mit einer Spurstange 8 gekoppelt. Die Spurstangen 8 sind wiederum jeweils mit den Fahrzeugrädern 4 mechanisch gekoppelt.

Das Steer-by-Wire-Lenksystem umfasst außerdem ein Lenkungsaktuator 9 und einen Feedbackaktuator 10. Der Feedbackaktuator 10 ist dazu eingerichtet, die Lenkspindel 2 und somit die Lenksäule 1 mit einem Lenkwiderstandsdrehmoment zu beaufschlagen.

Weiter umfasst das Steer-by-Wire-Lenksystem eine Recheneinheit 15, die insbesondere als Mikrocontrollerschaltung ausgebildet sein kann. Die Recheneinheit 15 empfängt dabei einen Degradationsfaktor 14. Dieser wird vorteilhafterweise von einer in Fig. 1 nicht explizit dargestellten weiteren Recheneinheit, insbesondere eine zentralen ECU eines Kraftfahrzeugs aus unterschiedlichen Sensorsignalen ermittelt. Insbesondere wird dazu die Temperatur des Lenkungsaktuators 9, der Stromverbrauch des Lenkungsaktuators 9 und die an dem Lenkungsaktuator 9 anliegende Spannung sensorisch überwacht. Die überwachten Größen werden dabei vorteilhafterweise von der weiteren Recheneinheit ausgewertet. Bei einer Abweichung von vorgegebenen Sollwerten für die überwachten Größen, wird der Degradationsfaktor 14 vorteilhafterweise entsprechend angepasst.

Basierend auf dem empfangenen Degradationsfaktor 14 berechnet die Recheneinheit 15 ein zusätzliches Lenkwiderstandsdrehmoment 16. Bei der Berechnung des Lenkwiderstandsdrehmoments 16 berücksichtigt die Recheneinheit 15 insbesondere zudem ein Reservelenkwiderstandsdrehmoment und ein Referenzlenkwiderstandsdrehmoment, die somit in die Berechnung des Lenkwiderstandsdrehmoments 16 eingehen. Das berechnete zusätzliche Lenkwiderstandsdrehmoment 16 wird von der Recheneinheit 15 an den Feedbackaktuator 10 übertragen, insbesondere an eine Steuereinheit des Feedbackaktuators 10.

Der Feedbackaktuator 10 beaufschlagt die Lenkwelle 2 der Lenksäule 1 daraufhin mit einem die Leistungsdegradation des Lenkungsaktuators 9 berücksichtigenden Lenkwiderstandsdrehmoment basierend auf dem von der Recheneinheit 15 berechneten zusätzlichen Lenkwiderstandsdrehmoment 16.

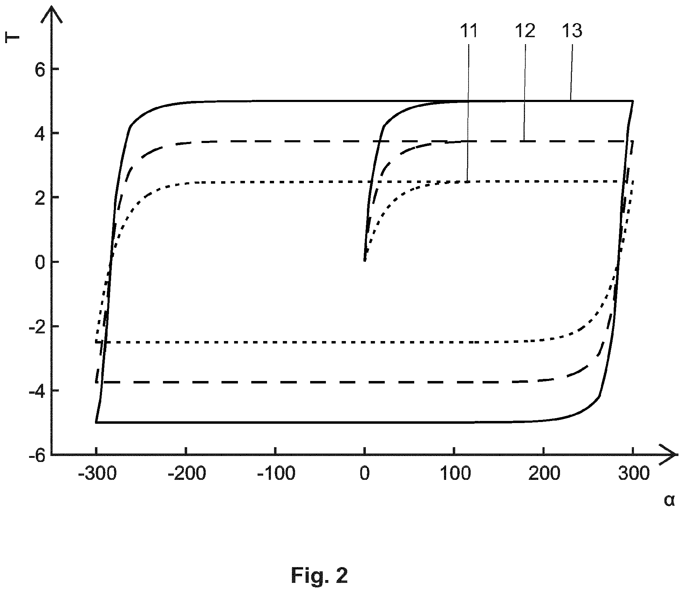

Auf diese Weise berechnete beispielhafte Lenkwiderstandsdrehmomente 16 für unterschiedliche Lenkwinkel sind in Fig. 2 gezeigt. In Fig. 2 ist dabei ein zweidimensionales Koordinatensystem dargestellt, in dem auf der vertikalen Achse aufgetragene Lenkwiderstandsdrehmomente T über auf der horizontalen Achse aufgetragene Lenkdrehwinkelwerte α dargestellt sind.

In dem Koordinatensystem sind drei Verläufe 11, 12, 13 dargestellt, wobei die Verläufe 11, 12, 13 von innen nach außen größer werdenden Degradationsfaktoren zugeordnet sind. Die drei Verläufe 11, 12, 13 weisen übereinstimmend jeweils die Form einer Hysterese auf. Die drei Verläufe 11, 12, 13 decken übereinstimmend einen Bereich der Lenkdrehwinkelwerte α von ca. -300 ° bis ca. 300 ° ab. Dagegen unterscheiden sich die drei Verläufe 11, 12, 13 in ihren jeweiligen Bereichen des Lenkwiderstandsdrehmoments T.

Der Verlauf 11 entspricht einem Zustand bei einem ermittelten Degradationsfaktor in Höhe von 0. Demnach entspricht der Verlauf 11 einer Lenkung ohne oder nahezu ohne eine Leistungsdegradation des Lenkungsaktuators 9. Dies ist insbesondere dann der Fall, wenn die von der weiteren Recheneinheit überwachten Größen, wie Temperatur, Stromverbrauch und anliegende Spannung, den vorgegebenen Sollwerten im Wesentlichen entsprechen. Ausgehend von der Neutralstellung des Lenkrads 7 bei dem Lenkdrehwinkelwert α = 0 ° zeigt der Verlauf 11 eine Lenkbewegung mit zunächst größer werdenden Lenkwiderstandsdrehmomentwerten entlang der Neukurve bis ein Sättigungsplateau bei dem Lenkwiderstandsdrehmoment T = 2,1 Nm erreicht ist und bis schließlich der Lenkdrehwinkelwert α = 300 ° erreicht ist. Bei α = 300 ° ist der maximal mögliche Lenkeinschlag in die erste Lenkrichtung erreicht. Während des Lenkens in die zweite Lenkrichtung, die der ersten Lenkrichtung entgegengesetzt ist, steigt der Lenkwiderstandsdrehmomentwert zunächst an bis ein Sättigungsplateau bei dem Lenkwiderstandsdrehmoment T = -2,1 Nm erreicht ist und bis schließlich der Lenkdrehwinkelwert α = -300 ° erreicht ist, der dem maximal möglichen Lenkeinschlag in die zweite Lenkrichtung entspricht. Bei einer erneuten Lenkbewegung in die erste Lenkrichtung steigt der Lenkwiderstandsdrehmomentwert erneut zunächst an bis das Sättigungsplateau bei dem Lenkwiderstandsdrehmoment T = 2,1 Nm erreicht ist und bis schließlich der Lenkdrehwinkelwert α = 300 ° erneut erreicht ist. Der Verlauf 11 wiederholt sich insoweit.

Der Verlauf 12 entspricht einem Zustand bei einem ermittelten Degradationsfaktor in Höhe von 0,1. Dies kann insbesondere dann der Fall sein, wenn die von der weiteren Recheneinheit überwachten Größen, wie Temperatur, Stromverbrauch und anliegende Spannung, von den vorgegebenen Sollwerten um 10 % bis 20 % abweichen. Die Abweichung ist dabei vorteilhafterweise für die jeweilige überwachte Größe individuell vorgegeben. Demnach entspricht der Verlauf 12 einer Lenkung mit einer moderaten Leistungsdegradation des Lenkungsaktuators 9. In analoger Weise zu dem Verlauf 11 zeigt der Verlauf 12 ausgehend von der Neutralstellung des Lenkrads 7 bei dem Lenkdrehwinkelwert α = 0 ° eine Lenkbewegung mit zunächst größer werdenden Lenkwiderstandsdrehmomentwerten entlang der Neukurve bis ein Sättigungsplateau bei dem Lenkwiderstandsdrehmoment T = 3,8 Nm erreicht ist und bis schließlich der Lenkdrehwinkelwert α = 300 ° erreicht ist. Bei α = 300 ° ist der maximal mögliche Lenkeinschlag in die erste Lenkrichtung erreicht. Während des Lenkens in die zweite Lenkrichtung, die der ersten Lenkrichtung entgegengesetzt ist, steigt der Lenkwiderstandsdrehmomentwert zunächst an bis ein Sättigungsplateau bei dem Lenkwiderstandsdrehmoment T = -3,8 Nm erreicht ist und bis schließlich der Lenkdrehwinkelwert α = -300 ° erreicht ist, der dem maximal möglichen Lenkeinschlag in die zweite Lenkrichtung entspricht. Bei einer erneuten Lenkbewegung in die erste Lenkrichtung steigt der Lenkwiderstandsdrehmomentwert erneut zunächst an bis das Sättigungsplateau bei dem Lenkwiderstandsdrehmoment T = 3,8 Nm erreicht ist und bis schließlich der Lenkdrehwinkelwert α = 300 ° erneut erreicht ist. Der Verlauf 12 wiederholt sich insoweit.

Der Verlauf 13 entspricht einem Zustand bei einem ermittelten Degradationsfaktor in Höhe von 0,2. Dies kann insbesondere dann der Fall sein, wenn die von der weiteren Recheneinheit überwachten Größen, wie Temperatur, Stromverbrauch und anliegende Spannung, von den vorgegebenen Sollwerten um mehr als 20 % abweichen. Die Abweichung ist dabei vorteilhafterweise für die jeweilige überwachte Größe individuell vorgegeben und kann im Einzelfall mehr oder weniger als 20 % betragen. Demnach entspricht der Verlauf 13 einer Lenkung mit einer gesteigerten Leistungsdegradation des Lenkungsaktuators 9. In analoger Weise zu den Verläufen 11, 12 zeigt der Verlauf 13 ausgehend von der Neutralstellung des Lenkrads 7 bei dem Lenkdrehwinkelwert α = 0 ° eine Lenkbewegung mit zunächst größer werdenden Lenkwiderstandsdrehmomentwerten entlang der Neukurve bis ein Sättigungsplateau bei dem Lenkwiderstandsdrehmoment T = 4,7 Nm erreicht ist und bis schließlich der Lenkdrehwinkelwert α = 300 ° erreicht ist. Bei α = 300 ° ist der maximal mögliche Lenkeinschlag in die erste Lenkrichtung erreicht. Während des Lenkens in die zweite Lenkrichtung, die der ersten Lenkrichtung entgegengesetzt ist, steigt der Lenkwiderstandsdrehmomentwert zunächst an bis ein Sättigungsplateau bei dem Lenkwiderstandsdrehmoment T = -4,7 Nm erreicht ist und bis schließlich der Lenkdrehwinkelwert α = -300 ° erreicht ist, der dem maximal möglichen Lenkeinschlag in die zweite Lenkrichtung entspricht. Bei einer erneuten Lenkbewegung in die erste Lenkrichtung steigt der Lenkwiderstandsdrehmomentwert erneut zunächst an bis das Sättigungsplateau bei dem Lenkwiderstandsdrehmoment T = 4,7 Nm erreicht ist und bis schließlich der Lenkdrehwinkelwert α = 300 ° erneut erreicht ist. Der Verlauf 13 wiederholt sich insoweit.

## Patentansprüche

1. Verfahren zur Änderung der Lenkcharakteristik eines eine Lenksäule (1), einen Lenkungsaktuator (9) und einen Feedbackaktuator (10) umfassenden Steer-by-Wire-Lenksystems in Abhängigkeit einer Leistungsdegradation des Lenkungsaktuators (9), wobei der Feedbackaktuator (10) dazu eingerichtet ist, die Lenksäule (1) mit einem Lenkwiderstandsdrehmoment zu beaufschlagen, umfassend folgende Schritte:
Ermitteln eines die Leistungsdegradation des Lenkungsaktuators (9) repräsentierenden Degradationsfaktors (14);
Berechnen eines zusätzlichen Lenkwiderstandsdrehmoments (16) basierend auf dem ermittelten Degradationsfaktor (14);
Beaufschlagen der Lenksäule (1) mit einem die Leistungsdegradation des Lenkungsaktuators (9) berücksichtigenden Lenkwiderstandsdrehmoment basierend auf dem berechneten zusätzlichen Lenkwiderstandsdrehmoment (16).

2. Verfahren nach Anspruch 1, **dadurch gekennzeichnet, dass** der Degradationsfaktor (14) basierend auf zumindest einer den physikalisch-technischen Zustand des Lenkungsaktuators (9) repräsentierenden Größe ermittelt wird.

3. Verfahren nach Anspruch 2, **dadurch gekennzeichnet, dass** die zumindest eine den physikalisch-technischen Zustand des Lenkungsaktuators (9) repräsentierende Größe eine erfasste Temperatur ist.

4. Verfahren nach Anspruch 2 oder Anspruch 3, **dadurch gekennzeichnet, dass** die zumindest eine den physikalisch-technischen Zustand des Lenkungsaktuators (9) repräsentierende Größe ein Stromverbrauch des Lenkungsaktuators (9) ist.

5. Verfahren nach einem der Ansprüche 2 bis 4, **dadurch gekennzeichnet, dass** die zumindest eine den physikalisch-technischen Zustand des Lenkungsaktuators (9) repräsentierende Größe eine Spannungsänderung an dem Lenkungsaktuator (9) ist.

6. Verfahren nach einem der Ansprüche 2 bis 5, **dadurch gekennzeichnet, dass** die zumindest eine den physikalisch-technischen Zustand des Lenkungsaktuators (9) repräsentierende Größe eine Fehlermeldung oder ein Diagnosesignal eines unteroder übergeordneten Systems ist.

7. Verfahren nach einem der Ansprüche 2 bis 6, **dadurch gekennzeichnet, dass** die zumindest eine den physikalisch-technischen Zustand des Lenkungsaktuators (9) repräsentierende Größe, eine die Alterung des Lenkungsaktuators (9) repräsentierende Größe ist.

8. Verfahren nach einem der vorgenannten Ansprüche, **dadurch gekennzeichnet, dass** der Degradationsfaktor (14) basierend auf der Differenz zwischen dem von dem Lenkungsaktuator (9) zu erzeugenden, zur Umsetzung eines Lenkwunsches erforderlichen Drehmoment und dem von dem Lenkungsaktuator (9) erzeugten, aufgrund der Leistungsdegradation des Lenkungsaktuators (9) herabgesetzten Drehmoment ermittelt wird.

9. Verfahren nach einem der vorgenannten Ansprüche, **dadurch gekennzeichnet, dass** das zusätzliche Lenkwiderstandsdrehmoment (16) auch basierend auf einem Reservelenkwiderstandsdrehmoment berechnet wird, wobei das Reservelenkwiderstandsdrehmoment ein zur Erzeugung haptischen Feedbacks zur Verfügung stehendes Lenkwiderstandsdrehmoment ist.

10. Verfahren nach einem der vorgenannten Ansprüche, **dadurch gekennzeichnet, dass** das zusätzliche Lenkwiderstandsdrehmoment (16) auch basierend auf einem Referenzlenkwiderstandsdrehmoment berechnet wird, wobei das Referenzlenkwiderstandsdrehmoment das Lenkwiderstandsdrehmoment unter der Annahme ausbleibender Leistungsdegradation des Lenkungsaktuators (9) ist.

11. Verfahren nach Anspruch 10, **dadurch gekennzeichnet, dass** das die Leistungsdegradation des Lenkungsaktuators (9) berücksichtigende Lenkwiderstandsdrehmoment (16) berechnet wird, indem das Referenzlenkwiderstandsdrehmoment und das zusätzliche Lenkwiderstandsdrehmoment addiert werden.

12. Steer-by-Wire-Lenksystem umfassend eine Lenksäule (1), einen Lenkungsaktuator (9) und einen Feedbackaktuator (10), **dadurch gekennzeichnet, dass** das Steer-by-Wire-Lenksystem zur Ausführung eines Verfahrens gemäß einem der vorstehenden Ansprüche ausgebildet ist.

## Claims

1. Method for changing the steering characteristics of a steer-by-wire steering system comprising a steering column (1), a steering actuator (9) and a feedback actuator (10) as a function of a power degradation of the steering actuator (9), the feedback actuator (10) being set up to apply a steering resistance torque to the steering column (1), comprising the following steps:
Determining a degradation factor (14) representing the power degradation of the steering actuator (9);
Calculation of an additional steering resistance torque (16) based on the determined degradation factor (14);
Applying a steering resistance torque to the steering column (1) based on the calculated additional steering resistance torque (16), taking into account the power degradation of the steering actuator (9).

2. Method according to claim 1, **characterized in that** the degradation factor (14) is determined based on at least one variable representing the physical-technical state of the steering actuator (9).

3. Method according to claim 2, **characterized in that** the at least one variable representing the physical-technical state of the steering actuator (9) is a detected temperature.

4. Method according to claim 2 or claim 3, **characterized in that** the at least one variable representing the physical-technical state of the steering actuator (9) is a current consumption of the steering actuator (9).

5. Method according to one of claims 2 to 4, **characterized in that** the at least one variable representing the physical-technical state of the steering actuator (9) is a voltage change at the steering actuator (9).

6. Method according to one of claims 2 to 5, **characterized in that** the at least one variable representing the physical-technical state of the steering actuator (9) is an error message or a diagnostic signal of a subordinate or higher-level system.

7. Method according to one of claims 2 to 6, **characterized in that** the at least one variable representing the physical-technical state of the steering actuator (9) is a variable representing the ageing of the steering actuator (9).

8. Method according to one of the preceding claims, **characterized in that** the degradation factor (14) is determined based on the difference between the torque to be generated by the steering actuator (9) and required to implement a steering request and the torque generated by the steering actuator (9) and reduced due to the power degradation of the steering actuator (9).

9. Method according to one of the preceding claims, **characterized in that** the additional steering resistance torque (16) is also calculated based on a reserve steering resistance torque, wherein the reserve steering resistance torque is a steering resistance torque available for generating haptic feedback.

10. Method according to one of the preceding claims, **characterized in that** the additional steering resistance torque (16) is also calculated based on a reference steering resistance torque, wherein the reference steering resistance torque is the steering resistance torque assuming no power degradation of the steering actuator (9).

11. Method according to claim 10, **characterized in that** the steering resistance torque (16) taking into account the power degradation of the steering actuator (9) is calculated by adding the reference steering resistance torque and the additional steering resistance torque.

12. Steer-by-wire steering system comprising a steering column (1), a steering actuator (9) and a feedback actuator (10), **characterized in that** the steer-by-wire steering system is designed to carry out a method according to one of the preceding claims.

## Revendications

1. Procédé pour modifier la caractéristique de direction d'un système de direction Steer-by-Wire comprenant une colonne de direction (1), un actionneur de direction (9) et un actionneur à rétroaction (10) en fonction d'une dégradation de puissance de l'actionneur de direction (9), l'actionneur à rétroaction (10) étant conçu pour appliquer à la colonne de direction (1) un couple de résistance de direction, comprenant les étapes suivantes:
déterminer un facteur de dégradation (14) représentant la dégradation de puissance de l'actionneur de direction (9);
calculer un couple de résistance de direction supplémentaire (16) sur la base du facteur de dégradation déterminé (14);
l'application à la colonne de direction (1) d'un couple de résistance de direction tenant compte de la dégradation de puissance de l'actionneur de direction (9), sur la base du couple de résistance de direction supplémentaire calculé (16).

2. Procédé selon la revendication 1, **caractérisé en ce que** le facteur de dégradation (14) est déterminé sur la base d'au moins une grandeur représentant l'état physique et technique de l'actionneur de direction (9).

3. Procédé selon la revendication 2, **caractérisé en ce que** ladite au moins une grandeur représentative de l'état physique et technique de l'actionneur de direction (9) est une température détectée.

4. Procédé selon la revendication 2 ou la revendication 3, **caractérisé en ce que** ladite au moins une grandeur représentative de l'état physique et technique de l'actionneur de direction (9) est une consommation électrique dudit actionneur de direction (9).

5. Procédé selon l'une des revendications 2 à 4, **caractérisé en ce que** ladite au moins une grandeur représentative de l'état physique et technique de l'actionneur de direction (9) est une variation de tension sur l'actionneur de direction (9).

6. Procédé selon l'une des revendications 2 à 5, **caractérisé en ce que** l'au moins une grandeur représentant l'état physique et technique de l'actionneur de direction (9) est un message d'erreur ou un signal de diagnostic d'un système subordonné ou supérieur.

7. Procédé selon l'une des revendications 2 à 6, **caractérisé en ce que** ladite au moins une grandeur représentative de l'état physique et technique de l'actionneur de direction (9) est une grandeur représentative du vieillissement de l'actionneur de direction (9).

8. Procédé selon l'une des revendications précédentes, **caractérisé en ce que** le facteur de dégradation (14) est déterminé sur la base de la différence entre le couple à générer par l'actionneur de direction (9), nécessaire à la mise en oeuvre d'un souhait de direction, et le couple généré par l'actionneur de direction (9), diminué en raison de la dégradation de puissance de l'actionneur de direction (9).

9. Procédé selon l'une quelconque des revendications précédentes, **caractérisé en ce que** le couple de résistance de direction supplémentaire (16) est également calculé sur la base d'un couple de résistance de direction de réserve, le couple de résistance de direction de réserve étant un couple de résistance de direction disponible pour générer un retour haptique.

10. Procédé selon l'une quelconque des revendications précédentes, **caractérisé en ce que** le couple de résistance de direction supplémentaire (16) est également calculé sur la base d'un couple de résistance de direction de référence, le couple de résistance de direction de référence étant le couple de résistance de direction en supposant l'absence de dégradation de puissance de l'actionneur de direction (9).

11. Procédé selon la revendication 10, **caractérisé en ce que** le couple de résistance de direction (16) prenant en compte la dégradation de puissance de l'actionneur de direction (9) est calculé en additionnant le couple de résistance de direction de référence et le couple de résistance de direction additionnel.

12. Système de direction Steer-by-Wire comprenant une colonne de direction (1), un actionneur de direction (9) et un actionneur à rétroaction (10), **caractérisé en ce que** le système de direction Steer-by-Wire est conçu pour exécuter un procédé selon l'une des revendications précédentes.
